# EUROPÄISCHE PATENTSCHRIFT

(11) **EP 0 468 310 B1**
(45) Veröffentlichungstag und Bekanntmachung des Hinweises auf die Patenterteilung: **08.10.1997**
(21) Anmeldenummer: 91111640.8
(22) Anmeldetag: 12.07.1991
(51) Int. Cl.: C08F 220/06, C08F 220/34, B41N 1/08

(54) **Thermisch vernetzbare hydrophile Mischpolymere sowie deren Verwendung in der Reprographie**
Thermally crosslinkable hydrophilic copolymers and their use in reprography
Copolymères réticulables thermiquement et leur usage

(30) Priorität: 21.07.1990 DE 4023271
(43) Veröffentlichungstag der Anmeldung: 29.01.1992
(73) Patentinhaber: Agfa-Gevaert AG, 51373 Leverkusen (DE)
(72) Erfinder: Faust, Raimund-Josef, Dr. Dipl.-Chem., W-6200 Wiesbaden (DE); Lutz, Silvia, W-6500 Mainz-Mombach (DE); Pliefke, Engelbert, Dr. Dipl.-Chem., W-6200 Wiesbaden (DE)

(56) Entgegenhaltungen:
- DE-A- 3 047 688
- GB-A- 2 026 517

## Beschreibung

Die Erfindung betrifft thermisch vernetzbare hydrophile Mischpolymere, aufgebaut aus polymeren Ketten, an denen saure und basische Seitengruppen angeordnet sind, sowie die Verwendung dieser Mischpolymeren zur Hydrophilierung von lithographischen Druckplatten.

Zur Herstellung von Offsetdruckplatten werden geeignete Schichtträger ein- oder beidseitig mit einer lichtempfindlichen Schicht (Kopierschicht) versehen, mit deren Hilfe ein druckendes Bild auf photomechanischem Wege erzeugt wird. Nach Herstellung des druckenden Bildes trägt der Schichtträger die druckenden Bildstellen und bildet zugleich an den bildfreien Stellen (Nichtbildstellen) den hydrophilen Bilduntergrund für den lithographischen Druckvorgang.

Ein zur Herstellung von lithographischen Platten geeigneter Schichtträger für lichtempfindliche Schichten muß daher folgenden Anforderungen genügen:
- Die nach der Belichtung relativ gut löslichen Teile der auf den Schichtträger aufgebrachten lichtempfindlichen Schicht müssen sich zur Erzeugung der Nichtbildstellen in einem Entwicklungsprozeß leicht und rückstandsfrei vom Träger ablösen lassen.
- Der an den Nichtbildstellen freigelegte Träger muß stark hydrophil sein, d.h. eine hohe Affinität zu Wasser besitzen, damit er beim lithographischen Druckvorgang schnell Wasser aufnehmen und dauerhaft halten kann und damit die fette Druckfarbe ausreichend abstößt.
- Die lichtempfindliche Schicht muß ausreichend fest an dem Schichtträger haften; auch die nach dem Belichten und Entwickeln verbliebenen druckenden Teile der Schicht müssen noch fest genug mit dem Träger verbunden sein um eine hohe Druckauflage zu erzielen.

Als Ausgangsmaterial für derartige Schichtträger können Aluminium-, Stahl-, Kupfer-, Messing- oder Zink-, aber auch Kunststoff-Folien oder Papier verwendet werden. Diese Rohmaterialien werden durch geeignete Behandlung ihrer Oberfläche, wie Körnung, Mattverchromung, oberflächliche Oxidation und/oder Aufbringen einer Zwischenschicht, zu Schichtträgern für Offsetdruckplatten. Aluminium, das heute wohl am häufigsten verwendete Basismaterial für Offsetdruckplatten, wird nach bekannten Methoden wie Trockenbürstung, Naßbürstung, Sandstrahlen, chemische und/oder elektrochemische Behandlung oder eine Kombination hiervon oberflächlich aufgerauht. Zur Steigerung der Abriebfestigkeit kann das so aufgerauhte Aluminium noch einer anodischen Oxidation zum Aufbau einer dünnen Oxidschicht unterworfen werden.

In der Praxis werden die Trägermaterialien, insbesondere anodisch oxidierte Trägermaterialien auf der Basis von Aluminium, oftmals zur Verbesserung der Schichthaftung, zur Steigerung der Hydrophilie und/oder zur Erleichterung der Entwickelbarkeit der lichtempfindlichen Schichten vor dem Aufbringen einer lichtempfindlichen Schicht einem weiteren Behandlungsschritt unterzogen, dazu zählen beispielsweise die folgenden Methoden:

In der DE-C 907 147 (= US-A 2,714,066), der DE-B 14 71 707 (= US-A 3,181,461 und US-A 3,280,734) oder der DE-A 25 32 769 (= US-A 3,902,976) werden Verfahren zur Hydrophilierung von Druckplattenträgermaterialien auf der Basis von gegebenenfalls anodisch oxidiertem Aluminium beschrieben, in denen diese Materialien ohne oder mit Einsatz von elektrischem Strom mit wäßriger Natriumsilikat-Lösung behandelt werden.

Aus der DE-A 11 34 093 (= US-A 3,276,868) und der DE-C 16 21 478 (= US-A 4,153,461) ist es bekannt, Polyvinylphosphonsäure oder Mischpolymerisate auf der Basis von Vinylphosphonsäure, Acrylsäure und Vinylacetat zur Hydrophilierung von Druckplattenträgermaterialien auf der Basis von gegebenenfalls anodisch oxidiertem Aluminium einzusetzen. Es wird auch der Einsatz von Salzen dieser Verbindungen erwähnt, aber nicht näher spezifiziert.

Der Einsatz komplexer Fluoride des Titans, Zirkons oder Hafniums gemäß der DE-B 13 00 415 (= US-A 3,440,050) führt ebenfalls zu einer zusätzlichen Hydrophilierung von Aluminiumoxidschichten auf Druckplattenträgermaterialien.

Neben diesen besonders bekanntgewordenen Hydrophilierungsmethoden ist beispielsweise auch noch der Einsatz folgender Polymere auf diesem Anwendungsgebiet beschrieben worden:

In der DE-B 10 56 931 wird der Einsatz von wasserlöslichen, linearen Mischpolymeren auf der Basis von Alkylvinylethern und Maleinsäureanhydriden in lichtempfindlichen Schichten für Druckplatten beschrieben. Daneben werden auch solche Mischpolymere genannt, bei denen die Maleinsäureanhydridkomponente teilweise oder vollständig mit Ammoniak, einem Alkalihydroxid oder einem Alkohol zur Reaktion gebracht wurde.

Aus der DE-B 10 91 433 ist die Hydrophilierung von Druckplattenträgermaterialien auf der Basis von Metallen mit filmbildenden organischen Polymeren, wie Polymethacrylsäure oder Natriumcarboxymethylcellulose oder -hydroxyethylcellulose bei Aluminiumträgern oder einem Mischpolymeren aus Methylvinylether und Maleinsäureanhydrid bei Magnesiumträgern bekannt.

Gemäß der DE-B 11 73 917 (= GB-A 907,719) werden zur Hydrophilierung von Druckplattenträgermaterialien aus Metallen wasserlösliche polyfunktionelle Amino-Harnstoff-Aldehyd-Kunstharze oder sulfonierte Harnstoff-Aldehyd-Kunstharze verwendet, die auf dem Metallträger in einen wasserunlöslichen Zustand ausgehärtet werden.

Zur Herstellung einer hydrophilen Schicht auf Druckplattenträgermaterialien werden gemäß der DE-B 12 00 847 (= US-A 3,232,783) auf dem Träger nacheinander a) eine wäßrige Dispersion eines modifizierten Harnstoff-Formaldehyd-Harzes, eines alkylierten Methylol-Melamin-Harzes oder eines Melamin-Formaldehyd-Polyalkylenpolyamin-Harzes, und b) eine wäßrige Dispersion einer Polyhydroxy- oder Polycarboxyverbindung, wie Natriumcarboxymethylcellulose aufgebracht, und anschließend wird die so überzogene Unterlage c) mit einer wäßrigen Lösung eines Zr-, Hf-, Ti oder Th-Salzes behandelt.

In der DE-B 12 57 170 (= US-A 2,991,204) wird ein Mischpolymer als Hydrophilierungsmittel für Druckplattenträgermaterialien beschrieben, das neben Acrylsäure-, Acrylat-, Acrylamid- oder Methacrylamid-Einheiten noch Si-trisubstitierte Vinylsilan-Einheiten enthält.

Aus der DE-A 14 71 706 (= US-A 3,298,852) ist der Einsatz von Polyacrylsäure als Hydrophilierungsmittel für Druckplattenträgermaterialien aus Aluminium, Kupfer oder Zink bekannt.

Gemäß der DE-C 21 07 901 (= US-A 3,733,200) wird die hydrophile Schicht auf einem Druckplattenträgermaterial aus einem wasserunlöslichen hydrophilen Acrylat- oder Methacrylat-Homopolymeren oder -Copolymeren mit einer Wasserabsorption von mindestens 20 Gew% gebildet.

In der DE-B 23 05 231 (= GB-A 1,414,575) wird eine Hydrophilierung von Druckplattenträgermaterialien beschrieben, bei der auf den Träger eine Lösung oder Dispersion eines Gemisches aus einem Aldehyd und einem synthetischen Polyacrylamid aufgebracht wird.

Aus der DE-A 23 08 196 (= US-A 3,861,917) ist eine Hydrophilierung von aufgerauhten und anodisch oxidierten Aluminium-Druckplattenträgern mit Ethylen-Maleinsäureanhydrid-Copolymeren oder Methylvinylether-Maleinsäureanhydrid-Copolymeren mit Polyacrylsäure, Carboxymethylcellulose, Natrium-poly(vinylbenzol-2,4-disulfonsäure) oder Polyacrylamid bekannt.

In der DE-B 23 64 177 (= US-A 3,860,426) wird eine hydrophile Haftschicht für Aluminium-Offsetdruckplatten beschrieben, die zwischen der anodisch oxidierten Oberfläche des Druckplattenträgers und der lichtempfindlichen Schicht angeordnet ist und neben einem Celluloseether noch ein wasserlösliches Zn-, Ca-, Mg-, Ba-, Sr-, Co- oder Mn-Salz enthält. Das Schichtgewicht der hydrophilen Haftschicht an Celluloseether beträgt 0,2 bis 1,1 mg/dm², ein gleiches Schichtgewicht wird auch für die wasserlöslichen Salze angegeben. Das Gemisch aus Celluloseether und Salz wird in wäßriger Lösung, gegebenenfalls unter Zusatz eines organischen Lösemittels und/oder eines Tensids, auf den Träger aufgetragen.

Gemäß der US-A 3,672,966 werden anodisch oxidierte Aluminiumoberflächen vor oder während der Versiegelung mit heißem Wasser zur Vermeidung von Sealbelägen mit wäßrigen Lösungen von Acrylsäure, Polyacrylsäure, Polymethacrylsäure, Polymaleinsäure oder Copolymeren von Maleinsäure mit Ethylen oder Vinylalkohol behandelt.

Gemäß der US-A 4,049,746 enthalten Hydrophilierungsmittel für Druckplattenträgermaterialien salzartige Reaktionsprodukte aus wasserlöslichen Polyacrylharzen mit Carboxylgruppen und Polyalkylenimin-Harnstoff-Aldehyd-Harzen.

In der GB-A 1,246,696 werden als Hydrophilierungsmittel für anodisch oxidierte Aluminium-Druckplattenträger hydrophile Kolloide, wie Hydroxyethylcellulose, Polyacrylamid, Polyethylenoxid, Polyvinylpyrrolidon, Stärke oder Gummi arabicum, beschrieben.

Die EP-B 0 149 490 beschreibt zur Hydrophilierung Verbindungen, die neben Aminogruppen zusätzlich Carboxyl- bzw. Carboxylatgruppen, Sulfogruppen oder Hydroxylgruppen enthalten. Diese Verbindungen haben ein Molekulargewicht von höchstens 1000.

Aus dem Stand der Technik ist auch der Einsatz von Metallkomplexen, die niedermolekulare Liganden aufweisen, zur Hydrophilierung von Druckplattenträgermaterialien bekannt. Solche Komplexe sind beispielsweise:
- Komplexionen aus zwei- oder mehrwertigen Metallkationen und Liganden, wie Ammoniak, Wasser, Ethylendiamin, Stickstoffoxid, Harnstoff oder Ethylendiamintetraacetat (DE-A 28 07 396 = US-A 4,208,212),
- Eisencyanid-Komplexe wie K₄(Fe(CN)₆) oder Na₃(Fe(CN)₆) in Anwesenheit von Heteropolysäuren, wie Phosphormolybdänsäure oder ihren Salzen und von Phosphaten (US-A 3,769,043),
- Eisencyanid-Komplexe in Anwesenheit von Phosphaten und Komplexbildnern wie Ethylendiamintetraessigsäure für elektrophotographische Druckplatten mit Zinkoxidoberfläche (= US-A 3,672,885).

In der EP-A 0 069 320 (= US-A 4,427,765) ist ein Verfahren beschrieben, in dem Salze von Polyvinylphosphonsäuren, Polyvinylsulfonsäuren, Polyvinylmethylphosphonsäuren und anderen Polyvinylverbindungen als Nachbehandlungsmittel eingesetzt werden.

In der DE-A 26 15 075 (= GB-A 1,495,895) wird ein Verfahren zur Behandlung bildtragender Offsetdruckplatten mit Polyacrylamid oder einer Mischung von Polyacrylamid und Polyacrylsäure benutzt.

In der SU-A 647 142 wird ein Copolymer aus Acrylamid und Vinyl-Monomeren zur Hydrophilierung von Offsetdruckplatten eingesetzt.

Die DE-C 10 91 433 beschreibt ein Verfahren zur Nachbehandlung von Offsetdruckplattenträgern mit Polymeren von Methacrylsäure, Methylvinylether und Maleinsäureanhydrid.

Acrylamid zur Behandlung von Druckplattenträgern wird auch in der DE-A 25 40 561 erwähnt.

Zum gleichen Zweck, insbesondere zur Verbesserung der Lagerfähigkeit von Druckplatten, beschreibt die DE-A 29 47 708 u.a. Ni-Salzlösungen von Acrylamid und Acrylsäure sowie Acrylamid und Vinylpyrrolidon.

All die oben beschriebenen Methoden sind jedoch mit mehr oder weniger großen Nachteilen behaftet, so daß die so hergestellten Trägermaterialien oft nicht mehr den heutigen Erfordernissen des Offsetdrucks hinsichtlich Entwicklerfestigkeit, Wasserführung, Freilaufverhalten und Auflagebeständigkeit genügen:
- So muß nach der Behandlung mit Alkalisilikaten, die zu guter Entwickelbarkeit und Hydrophilie führen, eine gewisse Verschlechterung der Lagerfähigkeit von darauf aufgebrachten lichtempfindlichen Schichten hingenommen werden, und die Auflage einer so nachbehandelten Druckplatte sinkt drastisch.
- Die Komplexe der Übergangsmetalle begünstigen zwar prinzipiell die Hydrophilie von anodisch oxidierten Aluminiumoberflächen, sie haben jedoch den Nachteil, sehr leicht in Wasser löslich zu sein, so daß sie beim Entwickeln der Schicht mit wäßrigen Entwicklersystemen, die neuerdings in zunehmendem Maße Tenside und/oder Chelatbildner enthalten, die eine große Affinität zu diesen Metallen besitzen, leicht entfernt werden können. Dadurch wird die Konzentration der Übergangsmetallkomplexe auf der Oberfläche mehr oder weniger stark reduziert, was zu einer Abschwächung der hydrophilen Wirkung führen kann.
- Bei der Behandlung von Trägern mit wasserlöslichen Polymeren ohne Verankerungsmöglichkeiten führt deren gute Löslichkeit besonders in wäßrig-alkalischen Entwicklern, wie sie überwiegend zum Entwickeln von positiv arbeitenden lichtempfindlichen Schichten verwendet werden, ebenfalls zu deutlicher Abschwächung der hydrophilierenden Wirkung.
- Monomere, hydrophile Verbindungen, wie z.B. in der EP-B 149 490 beschrieben, haben ganz allgemein den Nachteil, daß sie während des Entwicklungs- bzw. Druckprozesses relativ schnell von der freigelegten Nichtbildstellenoberfläche weggewaschen werden und ihre hydrophile Wirkung verlieren, da nicht genügend Verankerungsstellen in der Oberfläche gegeben sind.
- Auch die Kombination eines Gemisches aus einem wasserlöslichen Polymeren, wie einem Celluloseether, und einem wasserlöslichen Metallsalz führt, da die Schichtgewichte und damit die Schichtstärke relativ hoch gewählt werden (siehe DE-B 23 64 177), zu einer verminderten Kopierschichthaftung, die sich beispielsweise darin äußern kann, daß beim Entwickeln Teile der Entwicklerflüssigkeit Bildstellen unterwandern.

Aufgabe der Erfindung ist es, hochpolymere Hydrophilierungsmittel für Trägermaterialien für Offsetdruckplatten zur Verfügung zu stellen, die die lichtempfindlichen Schichten der Offsetdruckplatten in ihrer Lagerfähigkeit nicht negativ beeinträchtigen und die neben einer guten Haftung zur Oberfläche des Aluminiumträgers einerseits und zur lichtempfindlichen Schicht andererseits eine dauerhafte Hydrophilie der Nichtbildstellen der fertig entwickelten Offsetdruckplatte bewirken. Darüber hinaus sollen die erfindungsgemäßen Hydrophilierungsmittel nur schwer von den damit behandelten Trägermaterialien auswaschbar sein.

Gelöst wird diese Aufgabe durch Bereitstellen von hydrophilen Mischpolymeren gemäß Anspruch 1.

Die weitere Ausgestaltung der Erfindung ergibt sich aus den Merkmalen der Ansprüche 2 bis 17.

Die erfindungsgemäßen Mischpolymere besitzen gegenüber den bekannten Hydrophilierungsmitteln den Vorteil, daß sie thermisch vernetzt werden können. Nach dieser thermisch induzierten Vernetzung können die hydrophilen Mischpolymere nicht mehr von der Oberfläche des zu hydrophilierenden Substrats weggespült werden. Dies macht sich besonders beim Offsetdruck, bei dem bekanntlich ein Gemisch von Ölfarbe und Feuchtwasser verwendet wird, vorteilhaft bemerkbar. Die herkömmlichen Hydrophilierungsmittel wurden bisher im Verlauf der Druckauflage von dem Feuchtwasser weggespült, die thermisch vernetzten Mischpolymere hingegen verbleiben auf den Offsetdruckplatten.

Die hydrophilen Polymere zeichnen sich dadurch aus, daß sie entlang einer polymeren Kette saure und basische Seitengruppen aufweisen, die ionisierbar sind und zur Salzbildung befähigt sind.

Die thermisch vernetzbaren hydrophilen Mischpolymere sind lineare Polymere mit sauren und basischen Seitengruppen und haben folgenden Aufbau:

...-(A)ₘ-...-(B)ₙ-...-(C)ₒ-...-(D)ₚ-...

mit m + n + o + p = 100 Mol%.

Die Summe von m + n bewegt sich im Bereich von 5 bis 90 Mol%, wobei der Wert für m bzw. n ≥ 2 ist. Vorzugsweise sind m und n in etwa gleich, d.h. A und B liegen etwa in äquimolarem Verhältnis vor. Für den Wert o ergibt sich ein Bereich von 0 bis 90 Mol% und für p ein Bereich von 1 bis 60 Mol%. Insbesondere liegt der Wert für p innerhalb des Bereichs von 5 bis 20 Mol%.

Die polymeren Hydrophilierungsmittel sind statistisch aufgebaut und besitzen mittlere Molgewichte von mindestens 1 000, vorzugsweise 5 000 bis 50 000, doch auch Polymere mit noch höherem Molgewicht als 50 000 können mit technischem Vorteil verwendet werden.

Die Monomertypen A, B, C und D sind nachstehend aufgeführt:
**Monomertyp A:** Acrylsäure, Methacrylsäure, Maleinsäure, Fumarsäure, Itaconsäure, Maleinsäuremonoester, Fumarsäuremonoester, Itaconsäuremonoester, Vinylsulfonsäure, Vinylbenzoesäure, Vinylphosphonsäure, und andere säuregruppenhaltige polymerisierbare Monomere.
**Monomertyp B:** Dimethylaminoethyl-acrylat und -methacrylat, Diethylaminoethyl-acrylat und -methacrylat, Dimethylaminopropyl-acrylat und -methacrylat, Dimethylaminobutyl-acrylat und -methacrylat und andere zur Polymerisation geeignete aminogruppenhaltige Monomere. Es sind auch Vinylpyridin, dialkylminogruppenhaltige Styrole und andere mehr geeignet.
**Monomertyp C:** Acrylsäureester, Methacrylsäureester, Maleinsäure- und Fumarsäureester, Itaconsäureester, Styrol und substituierte Styrole, Vinylchlorid und andere unpolare, nicht hydrophile Monomereinheiten. Die Verwendung des Monomertyps C und dessen Konzentration läßt eine definierte Einstellung der Löslichkeit der Mischpolymeren zu.
**Monomertyp D:** N-Butoxymethyl-methacrylamid.

Die Synthese der Hydrophilierungsmittel erfolgt vorteilhaft durch eine radikalisch initiierte Polymerisation in organischen Lösungsmitteln.

Als radikalische Initiatoren können die üblichen Verbindungen verwendet werden, wie Peroxide, z.B. Benzoylperoxid oder Azoverbindungen, wie Azobisisobutyronitril (AIBN). Zusätzlich können Regler zur Einstellung des Molekulargewichts verwendet werden. Die Polymerisation in unpolaren Lösungsmitteln - als Fällungspolymerisation ausgeführt - hat den Vorteil, daß niedermolekulare, oligomere und chemisch uneinheitliche Anteile, z.B. Produkte, die nur wenig ionisierbare Gruppen enthalten, in Lösung bleiben und damit leicht von den ausgefallenen Polymeren abgetrennt werden können. Diese Polymerisationsart hat weiterhin den Vorteil der Einfachheit und der Wirtschaftlichkeit. Die Fällungspolymerisation in organischen Lösungsmitteln, wie beispielsweise in Benzinfraktionen im geeigneten Siedepunktbereich von 100 bis 140 °C ist sehr leicht und mit guter Ausbeute für Mischpolymere durchführbar, in denen die ionisierbaren Monomereinheiten des Typs A und B in den bevorzugt angewandten Konzentrationen von m ¼ n = 10 bis 50 Mol% vorliegen. Bei Konzentrationen im Bereich m und n = 2 bis 10 Mol% werden die Polymere durch Abdestillieren des organischen Lösungsmittels isoliert. Die folgenden Beispiele erläutern die grundsätzliche Polymerisationsmethode für einige bevorzugte Mischpolymere, die Erfindung ist jedoch nicht auf die angeführten Beispiele beschränkt.

### Beispiel 1

Es wird ein Mischpolymer aus Methacrylsäure, Dimethylaminoethylmethacrylat und Butoxymethylmethacrylamid hergestellt. Hierzu werden

| | |
|---|---|
| 34 g | Methacrylsäure |
| 63 g | Dimethylaminoethylmethacrylat und |
| 205 g | Butoxymethylmethacrylamid in |
| 302 g | Methylethylketon |

gelöst.

In einem Dreihalskolben, der mit Rührer, Rückflußkühler, Tropftrichter mit Druckausgleichsrohr sowie Gaseinleitungsrohr versehen ist, werden 302 g Ethylmethylketon und 1 Gew% Azobisisobutyronitril (AIBN), bezogen auf das Gesamtgewicht der Monomeren, vorgelegt und in einer Stickstoff-Schutzgasatmosphäre bis zum Rückfluß erhitzt. Mit dem Tropftrichter wird nun die 50 %ige Monomerlösung innerhalb von 60 Minuten eindosiert und das Ganze 2 Stunden unter Rückfluß polymerisiert. Sodann werden weitere 0,5 Gew% Azobisisobutyronitril hinzugegeben und weitere 2 Stunden unter Rückfluß polymerisiert. Der anfallende Feststoff ist nur schwer absaugbar. Deshalb wird das Lösungsmittel am Rotationsverdampfer abdestilliert.

Das Produkt wird bei 60 °C getrocknet.
Ausbeute: 88 %

Das Endprodukt ist vor der thermischen Behandlung gut löslich in 2-Dimethylaminoethanol.

Völlig analog zu der in Beispiel 1 beschriebenen Polymerisationsmethode können die in der nachstehenden Tabelle angeführten Mischpolymere (Beispiel 2 bis 6) hergestellt werden.

Sämtliche Produkte gemäß den Beispielen 1 bis 6 (s. Tabelle) sind vor der thermischen Nachbehandlung löslich in 2-Dimethylaminoethanol, nach der thermischen Nachbehandlung (170 °C) jedoch unlöslich in diesem Lösungsmittel.

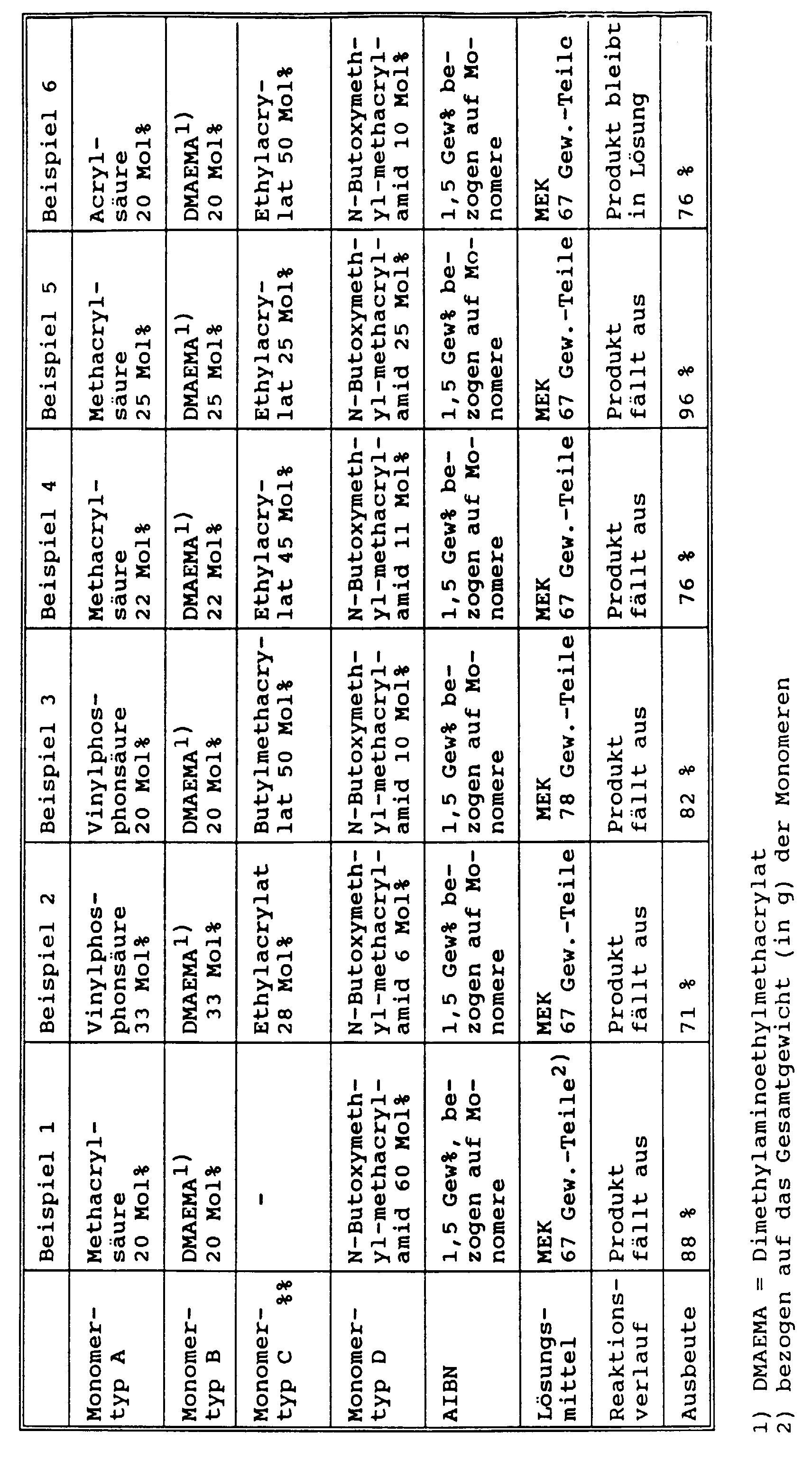

## Patentansprüche

1. Thermisch vernetzbare hydrophile Mischpolymere, aufgebaut aus polymeren Ketten, an denen saure und basische Seitengruppen angeordnet sind, der allgemeinen Struktur
...-(A)ₘ-...-(B)ₙ-...-(C)ₒ-...-(D)ₚ-...
worin
A: Monomertypen mit sauren Gruppen,
B: Monomertypen mit basischen Gruppen,
C: Monomertypen mit unpolaren, nicht hydrophilen Seitengruppen,
D: N-Butoxymethyl-methacrylamid
bedeuten und der Anteil der Monomertypen
| | |
|---|---|
| m + n | 5 bis 90 Mol% |
| o | 0 bis 90 Mol% |
| p | 1 bis 60 Mol% |
beträgt, mit der Maßgabe, daß die Summe von m + n + o + p = 100 Mol% ergibt, wobei m und n jeweils ≥ 2 Mol% sind und wobei die Mischpolymere statistisch aufgebaut sind und ein mittleres Molgewicht von mindestens 1000 aufweisen.

2. Hydrophile Mischpolymere nach Anspruch 1, dadurch gekennzeichnet, daß der Monomertyp A Acrylsäure, Methacrylsäure, Maleinsäure, Fumarsäure, Itaconsäure, Maleinsäuremonoester, Fumarsäuremonoester, Itaconsäuremonoester, Vinylsulfonsäure, Vinylbenzoesäure oder Vinylphosphonsäure ist.

3. Hydrophile Mischpolymere nach Anspruch 1, dadurch gekennzeichnet, daß der Monomertyp B Seitengruppen mit tertiären Aminogruppen enthält, wobei mit Dialkylaminogruppen substituiertes Styrol, Vinylpyridin, Dimethylaminoethyl-acrylat und -methacrylat, Diethylaminoethyl-acrylat und -methacrylat, Dimethylaminopropylacrylat und -methacrylat sowie Dimethylaminobutyl-acrylat und -methacrylat bevorzugt sind.

4. Hydrophile Mischpolymere nach Anspruch 1, dadurch gekennzeichnet, daß der Monomertyp C ein (Meth)acrylsäureester von aliphatischen Alkoholen mit 1 bis maximal 17 C Atomen, Styrol oder ein alkylsubstituiertes Styrol, Vinylchlorid, Maleinsäureester, Fumarsäureester oder Itaconsäureester, bevorzugt Methylacrylat, Methylmethacrylat, Ethylacrylat oder Ethylmethacrylat, ist.

5. Hydrophile Mischpolymere nach Anspruch 1, dadurch gekennzeichnet, daß die sauren seitengruppenhaltigen Monomeren des Typs A zu m = 2 bis 88 Mol% und gleichzeitig die basischen seitengruppenhaltigen Monomeren des Typs B zu n = 88 bis 2 Mol% enthalten sind.

6. Hydrophile Mischpolymere nach Anspruch 1, dadurch gekennzeichnet, daß die Monomertypen A und B etwa in äquimolarem Verhältnis stehen.

7. Hydrophile Mischpolymere nach Anspruch 1, dadurch gekennzeichnet, daß die Monomertypen A und B jeweils mit einem Anteil von 10 bis 50 Mol% enthalten sind.

8. Hydrophile Mischpolymere nach Anspruch 1, dadurch gekennzeichnet, daß die unpolaren, nichthydrophilen Monomeren des Typs C mit einem Anteil (o) von 2 bis 90 Mol%, vorzugsweise von 10 bis 60 Mol% enthalten sind.

9. Hydrophile Mischpolymere nach Anspruch 1, dadurch gekennzeichnet, daß der Monomertyp D in einem Anteil (p) von 5 bis 20 Mol% enthalten ist.

10. Hydrophile Mischpolymere nach einem der Ansprüche 1 bis 9, dadurch gekennzeichnet, daß sie ein mittleres Molgewicht von 5.000 bis 50.000 aufweisen.

11. Hydrophile Mischpolymere nach Anspruch 1, dadurch gekennzeichnet, daß sie in Wasser, Wasser/Alkohol-Gemischen oder in Wasser/2-Dimethylamino-ethanol-Gemischen löslich sind.

12. Hydrophile Mischpolymere nach Anspruch 1, dadurch gekennzeichnet, daß sie beim Erwärmen auf über 150 °C vernetzen.

13. Hydrophile Mischpolymere nach einem der Ansprüche 1 bis 12, dadurch gekennzeichnet, daß sie durch radikalische Polymerisation herstellbar sind.

14. Hydrophile Mischpolymere nach Anspruch 13, dadurch gekennzeichnet, daß die Polymerisation in organischen Lösungsmitteln erfolgt ist.

15. Hydrophile Mischpolymere nach Anspruch 13 oder 14, dadurch gekennzeichnet, daß die Polymerisation bei einer Temperatur erfolgt, bei der die Monomeren homogen löslich sind und die gebildeten Polymeren im Sinne einer Fällungspolymerisation unlöslich sind und ausfallen.

16. Verwendung der hydrophilen Mischpolymere nach den Ansprüchen 1 bis 15 als Hydrophilierungsmittel für lithographische Substrate, insbesondere für Aluminiumträger für Offsetdruckplatten.

## Claims

1. Thermally cross-linkable hydrophilic mixed polymers which are constructed from polymer chains on which there are arranged acid and basic side groups and have the general structure
...-(A)ₘ-...- (B)ₙ-...-(C)ₒ-...-(D)ₚ-...
in which
A denotes monomer types having acid groups,
B denotes monomer types having basic groups,
C denotes monomer types having apolar, non-hydrophilic side groups,
D denotes N-butoxymethyl methacrylamide,
and the proportion of the monomer types
| | |
|---|---|
| m + n | is 5 to 90 mol.%, |
| o | is 0 to 90 mol.%, |
| p | is 1 to 60 mol.%, |
with the proviso that the sum of m + n + o + p = 100 mol.%, wherein m and n are each ≥ 2 mol.% and wherein the mixed polymers are of random structure and have an average molecular weight of at least 1,000.

2. Hydrophilic mixed polymers according to Claim 1, characterised in that the monomer type A is acrylic acid, methacrylic acid, maleic acid, fumaric acid, itaconic acid, maleic acid monoester, fumaric acid monoester, itaconic acid monoester, vinylsulphonic acid, vinylbenzoic acid or vinylphosphonic acid.

3. Hydrophilic mixed polymers according to Claim 1, characterised in that the monomer type B contains side groups having tertiary amino groups, wherein styrene substituted with dialkylamino groups, vinylpyridine, dimethylaminoethyl acrylate and methacrylate, diethylaminoethyl acrylate and methacrylate, dimethylaminopropyl acrylate and methacrylate and dimethylaminobutyl acrylate and methacrylate are preferred.

4. Hydrophilic mixed polymers according to Claim 1, characterised in that the monomer type C is a (meth)acrylic acid ester of aliphatic alcohols having 1 to a maximum of 17 carbon atoms, styrene or an alkyl-substituted styrene, vinyl chloride, maleic acid ester, fumaric acid ester or itaconic acid ester, preferably methyl acrylate, methyl methacrylate, ethyl acrylate or ethyl methacrylate.

5. Hydrophilic mixed polymers according to Claim 1, characterised in that the proportion of the acid side group-containing monomers of the type A contained is m = 2 to 88 mol.% and the proportion of the basic side group-containing monomers of the type B contained is simultaneously n = 88 to 2 mol.%.

6. Hydrophilic mixed polymers according to Claim 1, characterised in that the ratio of the monomer types A to the monomer types B is approximately equimolar.

7. Hydrophilic mixed polymers according to Claim 1, characterised in that the proportion of both the monomer types A and the monomer types B contained is 10 to 50 mol.%.

8. Hydrophilic mixed polymers according to Claim 1, characterised in that the proportion of the apolar, non-hydrophilic monomers of the type C contained (o) is 2 to 90 mol.%, preferably 10 to 60 mol.%.

9. Hydrophilic mixed polymers according to Claim 1, characterised in that the proportion of the monomer type D contained (p) is 5 to 20 mol.%.

10. Hydrophilic mixed polymers according to one of Claims 1 to 9, characterised in that they have an average molecular weight of 5,000 to 50,000.

11. Hydrophilic mixed polymers according to Claim 1, characterised in that they are soluble in water, water-alcohol mixtures or water/2-dimethylaminoethanol mixtures.

12. Hydrophilic mixed polymers according to Claim 1, characterised in that they cross-link when heated to above 150°C.

13. Hydrophilic mixed polymers according to one of Claims 1 to 12, characterised in that they are preparable by free-radical polymerisation.

14. Hydrophilic mixed polymers according to Claim 13, characterised in that the polymerisation takes place in organic solvents.

15. Hydrophilic mixed polymers according to Claim 13 or 14, characterised in that the polymerisation takes place at a temperature at which the monomers are soluble in homogeneous manner and the polymers formed are insoluble and precipitate out within the meaning of a precipitation polymerisation.

16. Use of the hydrophilic mixed polymers according to Claims 1 to 15 as agents for imparting hydrophilic properties to lithographic substrates, in particular for aluminium supports for offset printing plates.

## Revendications

1. Copolymères hydrophiles réticulables thermiquement, constitués par des chaînes polymériques sur lesquelles sont disposés des groupes latéraux acides et basiques, de structure générale
...-(A)ₘ-...-(B)ₙ-...-(C)ₒ-...-(D)ₚ-...
où
A: types de monomère à groupes acides,
B : types de monomère à groupes basiques,
C : types de monomère à groupes latéraux non polaires non hydrophiles,
D : N-butyloxyméthylméthacrylamide
et la proportion des types de monomères est de
| | |
|---|---|
| m+n | 5 à 90 mol % |
| o | 0 à 90 mol % |
| p | 1 à 60 mol % |
avec la condition que la somme m + n + o + p = 100 mol %, m et n étant l'un et l'autre ≥ 2 mol % et les copolymères sont formés de manière statistique et présentent une masse moléculaire moyenne d'au moins 1000.

2. Copolymères hydrophiles selon la revendication 1, caractérisés en ce que le type de monomère A est l'acide acrylique, l'acide méthacrylique, l'acide maléique, l'acide fumarique, l'acide itaconique, un monoester d'acide maléique, un monoester d'acide fumarique, un monoester d'acide itaconique, l'acide vinylsulfonique, l'acide vinylbenzoïque ou l'acide vinylphosphonique.

3. Copolymères hydrophiles selon la revendication 1, caractérisés en ce que le type de monomère B contient des groupes latéraux ayant des groupes amino tertiaires, le styrène substitué par des groupes dialkylamino, la vinylpyridine, l'acrylate et le méthacrylate de diméthylaminoéthyle, l'acrylate et le méthacrylate de diéthylaminoéthyle, l'acrylate et le méthacrylate de diméthylaminopropyle et l'acrylate et le méthacrylate de diméthylaminobutyle étant préférés.

4. Copolymères hydrophiles selon la revendication 1, caractérisés en ce que le type de monomère C est un ester d'acide (méth)acrylique et d'alcools aliphatiques ayant 1 à 17 atomes de C au plus, le styrène ou un styrène alkyl-substitué, le chlorure de vinyle, un ester d'acide maléique, un ester d'acide fumarique ou un ester d'acide itaconique, de préférence l'acrylate de méthyle, le méthacrylate de méthyle, l'acrylate d'éthyle ou le méthacrylate d'éthyle.

5. Copolymères hydrophiles selon la revendication 1, caractérisés en ce que les monomères contenant des groupes latéraux acides du type A sont contenus à raison de m = 2 à 88 mol % et en même temps les monomères contenant des groupes latéraux basiques du type B sont contenus à raison de n = 88 à 2 mol %.

6. Copolymères hydrophiles selon la revendication 1, caractérisés en ce que les types de monomères A et B sont sensiblement dans un rapport équimolaire.

7. Copolymères hydrophiles selon la revendication 1, caractérisés en ce que les types de monomères A et B sont contenus l'un et l'autre en une proportion de 10 à 50 mol %.

8. Copolymères hydrophiles selon la revendication 1, caractérisés en ce que les monomères non polaires non hydrophiles du type C sont contenus en une proportion (o) de 2 à 90 mol %, de préférence de 10 à 60 mol %.

9. Copolymères hydrophiles selon la revendication 1, caractérisés en ce que le type de monomères D est contenu en une proportion (p) de 5 à 20 mol %.

10. Copolymères hydrophiles selon l'une des revendications 1 à 9, caractérisés en ce qu'ils présentent une masse moléculaire moyenne de 5000 à 50000.

11. Copolymères hydrophiles selon la revendication 1, caractérisés en ce qu'ils sont solubles dans l'eau, dans des mélanges eau/alcool ou dans des mélanges eau/2-diméthylaminoéthanol.

12. Copolymères hydrophiles selon la revendication 1, caractérisés en ce qu'ils se réticulent par chauffage à plus de 150°C.

13. Copolymères hydrophiles selon l'une des revendications 1 à 12, caractérisés en ce qu'ils peuvent être préparés par polymérisation radicalaire.

14. Copolymères hydrophiles selon la revendication 13, caractérisés en ce que la polymérisation se déroule dans des solvants organiques.

15. Copolymères hydrophiles selon la revendication 13 ou 14, caractérisés en ce que la polymérisation est réalisée à une température à laquelle les monomères sont solubles de manière homogène et les polymères formés sont insolubles et précipitent au sens d'une polymérisation par précipitation.

16. Utilisation des copolymères hydrophiles selon les revendications 1 à 15 comme agents pour rendre hydrophiles des substrats lithographiques, en particulier des supports en aluminium pour plaques d'impression offset.
